Europäisches Patentamt

European Patent Office

Office européen des brevets

(11) Veröffentlichungsnummer: **0 188 760**
A2

# (12) EUROPÄISCHE PATENTANMELDUNG

(21) Anmeldenummer: **85116146.3**

(22) Anmeldetag: **18.12.85**

(51) Int. Cl.⁴: **G 02 B 26/10**

(30) Priorität: **19.01.85 DE 3501653**

(43) Veröffentlichungstag der Anmeldung: **30.07.86**
**Patentblatt 86/31**

(84) Benannte Vertragsstaaten: **AT BE CH DE FR GB LI NL SE**

(71) Anmelder: **Ingenieurbüro Klinkler & Kolar oHG,
Rheinstrasse 96, D-6100 Darmstadt (DE)**

(72) Erfinder: **Ruppender, Uwe, Ifflandstrasse 7,
D-6800 Mannheim (DE)**

(74) Vertreter: **Katscher, Helmut, Dipl.-Ing.,
Bismarckstrasse 29, D-6100 Darmstadt (DE)**

(54) Vorrichtung zur optischen Gegenstandsabtastung mittels einer fotoelektrischen Sensorzelle.

(57) Zur optischen Gegenstandsabtastung einer Gegenstandszeile (8) mittels einer fotoelektrischen Sensorzeile (4) und einer Abbildungsoptik (7) ist vor der Sensorzeile (4) und parallel zu dieser eine Zylinderlinse (6) angeordnet. Die Zylinderlinse (6) bewirkt eine optische Integration in einer Richtung quer zur Abtastrichtung unter Beibehaltung einer hohen optischen Auflösung in Abtastrichtung.

ACTORUM AG

EP 0 188 760 A2

0188760

KLI 1058

Ingenieurbüro Klinkler + Kolar oHG

Vorrichtung zur optischen Gegenstandsabtastung mittels
einer fotoelektrischen Sensorzeile

Die Erfindung betrifft eine Vorrichtung zur optischen
Gegenstandsabtastung mittels einer fotoelektrischen
Sensorzeile mit einer im Strahlengang zwischen der
abzutastenden Gegenstandszeile und der Sensorzeile
angeordneten Abbildungsoptik.

In vielen technischen Gebieten stellt sich die Aufgabe
der optischen Überwachung einer Materialbahn, eines
Materialstroms oder eines anderen kontinuierlich oder
absatzweise bewegten Gebildes. Derartige Aufgaben sind
im Bereich der industriellen Fertigung, insbesondere der
Qualitätskontrolle oder der Materialflußsteuerung und
-überwachung häufig.

Anstelle einer flächigen Gegenstandsabtastung mittels
Bildaufnahmeröhren oder Rasterkameras, für die ein
erheblicher Aufwand auch bei der Bildauswertung erforderlich ist, hat sich die optische Gegenstandsabtastungjeweils einer quer zum Materialfluß verlaufenden Gegenstandszeile mittels einer fotoelektrischen Sensorzeile bewährt. Hierbei wird das Bild der abzutastenden Gegenstandszeile durch eine Abbildungsoptik auf der Sensorzeile abgebildet. Um eine hohe Auflösung zu erreichen, werden beispielsweise CCD-Sensoren (Charge-Coupled Device) verwendet.

Die sehr geringe Flächenausdehnung der einzelnen Sensoren von beispielsweise 13 $\mu$m x 13 $\mu$m bewirkt, daß die jeweils erfaßte Gegenstandszeile ebenfalls sehr schmal ist. Bei dem genannten Beispiel würde bei Verwendung einer Abbildungsoptik mit einem Vergrößerungsmaßstab von 1:1 nur eine Gegenstandszeile von 13 $\mu$m Breite abgebildet. Beim Einsatz z.B. als Strichcodescanner besteht die Schwierigkeit, daß sich kleinste Druckungenauigkeiten, Verschmutzungen und andere Unregelmäßigkeiten des Druckbildes störend auswirken, so daß aufwendige zusätzliche elektronische Maßnahmen erforderlich werden. Die optische Gegenstandsabtastung muß mit einer hohen Abtastrate durchgeführt werden mit anschliessender elektronischer und elektrischer Mittelwertbildung. Diese Maßnahmen setzen sehr rasch ansprechende und deshalb aufwendige Sensorzeilen voraus. Auch die nachgeschalteten Rechner und Auswertesysteme müssen mit sehr hoher Geschwindigkeit arbeiten. Schließlich sind sehr helle Lichtquellen erforderlich; außerdem erforderlichen hohen technischen Aufwand (Spannungsstabilisatoren) haben diese Lichtquellen in vielen Anwendungsfällen noch den Nachteil, daß sie mit verhältnismäßig großer Wärmeentwicklung(hohe Verlustleistung) arbeiten.

In den meisten Anwendungsfällen ist quer zur Abtastrichtung eine wesentlich geringere optische Auflösung
erforderlich als in Abtastrichtung (z.B. Bar-Code-Feld).

Es sind auch Sensorzeilen bekannt, deren einzelne Sensoren
quer zur Abtastrichtung eine wesentlich größere Abmessung haben als in Abtastrichtung. Diese Sensoren
sind aber sehr aufwendig und teuer und haben nur einen
geringen Transferwirkungsgrad.

Aufgabe der Erfindung ist es daher, eine Vorrichtung der
eingangs genannten Gattung zu schaffen, die unter Beibehaltung des einfachen Aufbaus der fotoelektrischen Sensorzeilen
und der hohen optischen Auflösung in Abtastrichtung
eine optische Integration quer zur Abtastrichtung ermöglicht.

Diese Aufgabe wird erfindungsgemäß dadurch gelöst, daß vor
der Sensorzeile und parallel zu dieser eine Zylinderlinse
angeordnet ist. Durch die Zylinderlinse wird erreicht, daß
eine Gegenstandszeile, die wesentlich breiter als die Sensorzeile ist, auf der Sensorzeile abgebildet wird.
Es erfolgt eine optische Integration über die Breite
der Gegenstandszeile unter Beibehaltung der hohen
optischen Auslösung in Abtastrichtung. Dadurch ist
die erforderliche Beleuchtungsdichte in der Gegenstandsebene verhältnismäßig gering, so daß man mit weniger
hellen Lichtquellen auskommt. Auch die Verlustleistung
der Sensoren ist durch die damit mögliche langsamere
Abtastgeschwindigkeit (Faktor ca. 1/10) verhältnismäßig
gering; deshalb ist keine Kühlung erforderlich. Die Vorrichtung kann mit niedrigen Abtastraten und niedrigen
Pixelfrequenzen betrieben werden; auch die erforderliche
Arbeitsgeschwindigkeit der nachgeschalteten Auswertesysteme ist verhältnismäßig gering.

Die jeweils zweckmäßigste Bauform der Zylinderlinse wird durch die erforderliche Brennweite bestimmt, die in vielen Anwendungsfällen dadurch vorgegeben ist, daß die Zylinderlinse in einem vorgegebenen Mindestabstand auf einem vor der Sensorzeile angeordneten Fenster angebracht wird.

Vorteilhafte Ausgestaltungen des Erfindungsgedankens sind Gegenstand von Unteransprüchen.

Es ist zwar bekannt (DE-AS 24 36 209), bei einem Kartenlesegerät eine Zylinderlinse zwischen einer Reihe von fotoelektrischen Sensoren und einer Zeile von abzutastenden Markierungen auf einer Karte anzuordnen. Die Zylinderlinse dient dort jedoch nicht zur optischen Integration quer zur Abtastrichtung, sondern bildet die Abbildungsoptik selbst. Bei dieser bekannten Vorrichtung stellt sich auch nicht das Problem, eine hohe optische Auflösung in Abtastrichtung aufrechtzuerhalten, weil die abzutastenden Kartenmarkierungen in Abtastrichtung in verhältnismäßig großen Abständen zueinander angeordnet sind; demzufolge sind auch die Abstände der einzelnen Sensoren so groß, daß zwischen diesen jeweils noch eine Lichtquelle angeordnet ist.

Die Erfindung wird nachfolgend an Ausführungsbeispielen näher erläutert, die in der Zeichnung dargestellt sind.
Es zeigt:
Fig. 1    in stark vereinfachter, nicht maßstäblicher Darstellungsweise eine Vorrichtung zur optischen Abtastung von Gegenstandszeilen,
Fig. 2    in einem Teilschnitt ähnlich der Fig. 1 eine abgewandelte Ausführung der Zylinderlinse,
Fig.
  3 - 7    in vereinfachter Darstellungsweise jeweils unterschiedliche Anbringungsarten der Zylinderlinse und
Fig. 8    in vereinfachter, ebenfalls nicht maßstäblicher Darstellungsweise eine Vorrichtung zur optischen Gegenstandsabtastung mit anamorphotischem Objektiv.

Der Begriff "Zylinderlinse" wird in diesem Zusammenhang für stabförmige optische Linsen verwendet, deren brechende Flächen mindestens teilweise durch Zylinderflächen gebildet werden.

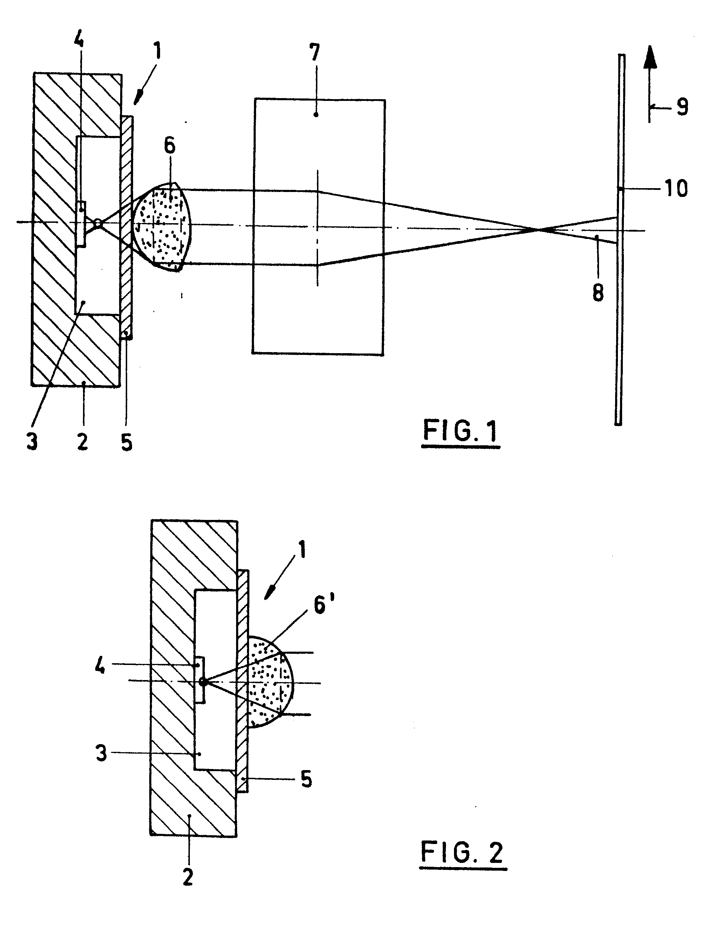

Fig. 1 zeigt in stark vergrößerter Schnittdarstellung einen Zeilensensor 1, der ein Keramikgehäuse 2 aufweist mit einer Ausnehmung 3, an deren Grund eine fotoelektrische Sensorzeile 4 angeordnet ist, die aus einem CCD-Chip mit dicht nebeneinander angeordneten Sensoren besteht. Die Ausnehmung 3 ist durch ein Quarzfenster 5 verschlossen.

Auf dem Quarzfenster 5 ist parallel und im Abstand zur Sensorzeile 4 eine Zylinderlinse 6 angebracht. Beim Ausführungsbeispiel nach Fig.1 handelt es sich dabei um eine Bikonvexlinse, die so angebracht ist, daß der Krümmungsradius auf der der Sensorzeile 4 zugewandten Seite der Zylinderlinse 6 kleiner als der Krümmungsradius auf der anderen Seite ist.

Im entsprechenden Abstand vor der Zylinderlinse 6 ist eine herkömmliche Abbildungsoptik 7 angeordnet, die eine Gegenstandszeile 8 einer in Richtung des Pfeiles 9 bewegten Materialbahn 10 auf der Sensorzeile 4 abbildet. Die Gegenstandszeile 8 erstreckt sich quer zu der durch den Pfeil 9 gekennzeichneten Bewegungsrichtung der Materialbahn 10. Durch die Wirkung der Zylinderlinse 6 erfolgt eine optische Integration quer zur Abtastrichtung, d.h. in Richtung der durch den Pfeil 9 gekennzeichneten Bewegung.

Die Krümmungsradien der bikonvexen Zylinderlinse 6 sind so gewählt, daß der Krümmungsradius auf der der Sensorzeile 4 zugewandten Seite der Zylinderlinse 6 ungefähr 1/6 des Krümmungsradius auf der anderen Seite bei einer Brechzahl der Zylinderlinse von ungefähr 1,5 ist. Dadurch wird eine größtmögliche Verringerung der Randverzerrungen erreicht.

Bei der in Fig. 2 gezeigten Ausführungsform ist die Zylinderlinse 6' als plankonvexe Zylinderlinse ausgeführt, die in diesem Fall mit ihrer Planseite der Sensorzelle 4 zugekehrt ist. Diese Anordnung hat den Vorteil, daß die Zylinderlinse 6' mit dem Quarzfenster 5 verklebt werden kann, wodurch die Übergangsverluste an der Grenzfläche zwischen Luft und Glas verringert werden. Eine geringere Brennweite der plankonvexen Zylinderlinse 6' läßt sich dadurch erreichen, daß die Zylinderfläche der plankonvexen Zylinderlinse 6' der Sensorzeile 4 zugekehrt wird.

Daneben sind auch konkav-konvexe Ausführungen der Zylinderlinse möglich, wobei eine besonders geringe Brennweite dadurch erzielt werden kann, daß die Konvexfläche der Zylinderlinse der Zeile 4 zugekehrt ist. Die Zylinderlinse kann auch aus mehreren einzelnen Zylinderlinsen zusammengesetzt sein. Diese Ausführungsform bietet sich an, wenn ein achromatisches Linsensystem gebildet werden soll, wenn besonders günstige Übertragungseigenschaften für farbiges Licht angestrebt werden.

Ungünstig und deshalb für den geschilderten Zweck nicht brauchbar sind vollzylindrische Linsen, da wegen deren großen Randverzerrungen keine scharfe Bündelung in der Brennebene möglich ist. Die Randverzerrungen sind bei bikonvexen bzw. plankonvexen Linsen weitaus geringer und können durch zusätzliche Blenden bis auf einen vernachlässigbaren Rest ausgeschaltet werden. Dünne plan- oder bikonvexe Linsen haben einen wesentlich geringeren Brechungsversatz als vollzylindrische Linsen.

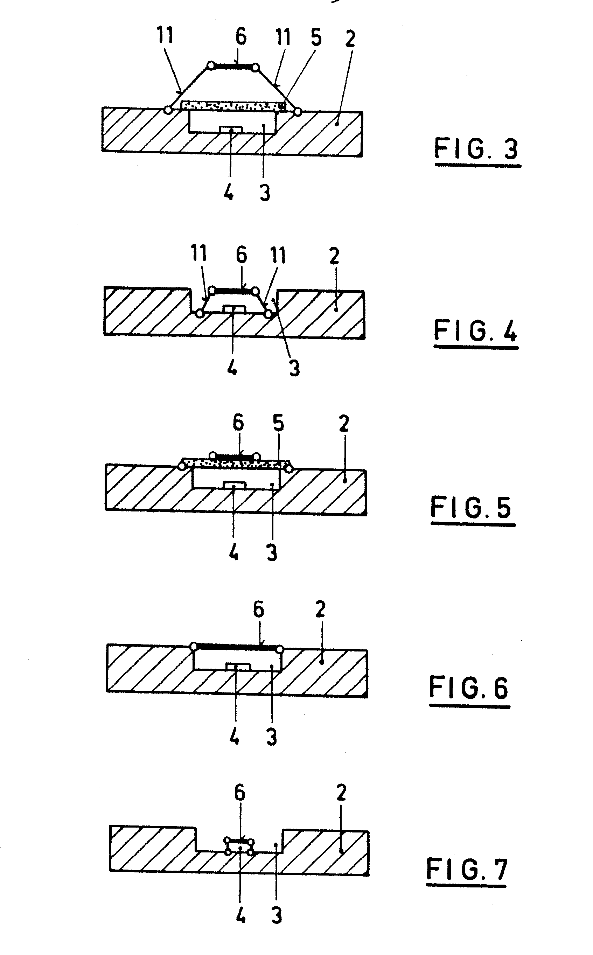

In den Figuren 3 - 7 sind verschiedene Anbringungsmöglichkeiten der Zylinderlinsen 6 dargestellt, wobei insbesondere die Darstellung der Linsensysteme und der Halterungen nur als Symbole für unterschiedliche Ausführungsmöglichkeiten zu verstehen sind.

Fig. 3 zeigt eine Halterung 11, die die Zylinderlinse 6 im Abstand vor dem Quarzfenster 5 hält. Die Halterung 11 ist dabei am Keramikgehäuse 2 angebracht.

In Fig. 4 ist kein Quarzfenster vorhanden; die Zylinderlinse 6 wird dabei durch die Halterung 11 in der Ausnehmung 3 des Keramikgehäuses 2 im Abstand von der Sensorzeile 4 gehalten.

Fig. 5 zeigt im Prinzip die Anordnung nach Fig. 2, nämlich die Anbringung der Zylinderlinse 6 unmittelbar an der Vorderfläche des Quarzfensters 5.

Bei der Ausführung nach Fig. 6 bildet die Zylinderlinse 6 selbst die Halterung; sie ist unmittelbar am Keramikgehäuse 2 befestigt.

Fig. 7 zeigt die Anbringung der Zylinderlinse 6 unmittelbar auf dem die Sensorzeile 4 bildenden Chip, der dabei als Halterung für die Zylinderlinse 6 dient.

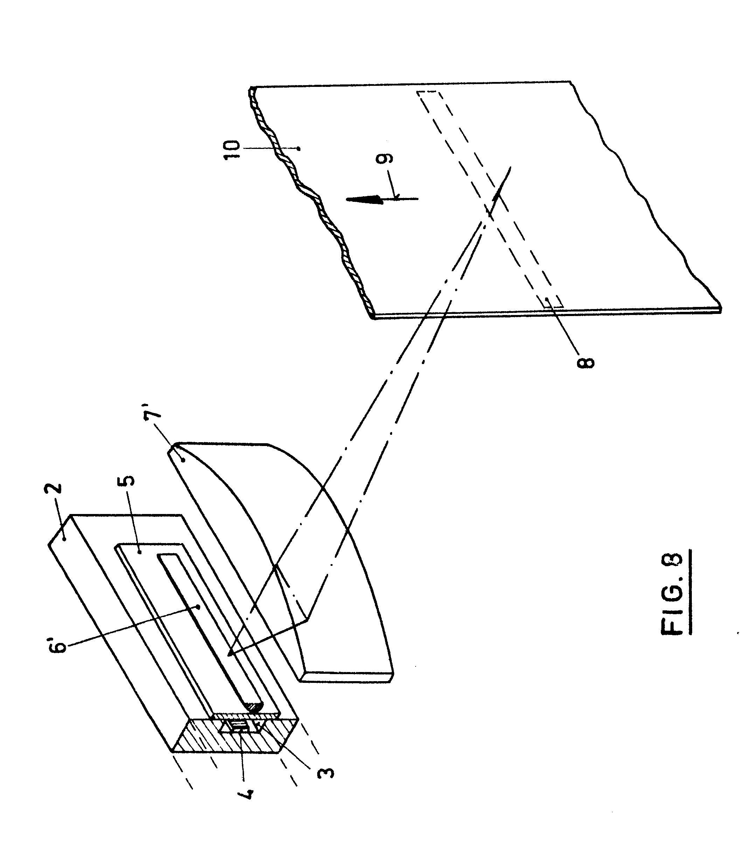

Bei dem in Fig. 8 gezeigten Ausführungsbeispiel ist an der Vorderseite des Quarzfensters 5 des Keramikgehäuses 2 eine plankonvexe Zylinderlinse 6' so angebracht, daß ihre Zylinderfläche der Sensorzeile 4 zugekehrt ist. Eine Halterung für die Zylinderlinse 6' ist in Fig. 8 der einfacheren Darstellung halber weggelassen.

Die Abbildungsoptik 7' ist in Fig. 8 ebenfalls als plankonvexe Zylinderlise ausgeführt, die jedoch um $90^{\circ}$ zu der Zylinderlinse 6' um die optische Achse versetzt ist. Die beiden Zylinderlinsen 6' und 7' bilden zusammen ein anamorphotisches Objektiv, das in horizontaler Richtung und vertikaler Richtung unterschiedliche und frei wählbare Abbildungsmaßstäbe zur Abbildung der Gegenstandszeile 8 der in Richtung des Pfeiles 9 bewegten Materialbahn 10 auf der Sensorzeile 4 ermöglicht.

Bei allen beschriebenen Ausführungsbeispielen wurde angenommen, daß sich der abzutastende Gegenstand bewegt, während die Abtastvorrichtung ortsfest angeordnet ist. Es versteht sich, daß in allen Fällen auch eine kinematische Umkehr möglich ist, bei der die Abtastvorrichtung bewegt wird, während der abzutastende Gegenstand stillsteht.

Ingenieurbüro Klinkler + Kolar oHG

Vorrichtung zur optischen Gegenstandsabtastung
mittels einer fotoelektrischen Sensorzeile

P a t e n t a n s p r ü c h e :

1. Vorrichtung zur optischen Gegenstandsabtastung mittels
einer fotoelektrischen Sensorzeile mit einer im
Strahlengang zwischen der abzutastenden Gegenstandszeile und der Sensorzeile angeordneten Abbildungsoptik,
dadurch gekennzeichnet, daß vor der Sensorzeile (4)
und parallel zu dieser eine Zylinderlinse (6, 6') angeordnet ist.

2. Vorrichtung nach Anspruch 1, dadurch gekennzeichnet, daß
die Zylinderlinse (6) bikonvex ist.

3. Vorrichtung nach Anspruch 2, dadurch gekennzeichnet, daß
der Krümmungsradius auf der der Sensorzeile (4) zugewandten Seite der Zylinderlinse (6) kleiner als der Krümmungsradius auf der anderen Seite ist.

4. Vorrichtung nach Anspruch 3, dadurch gekennzeichnet, daß der Krümmungsradius auf der der Sensorzeile (4) zugewandten Seite der Zylinderlinse (6) ungefähr 1/6 des Krümmungsradius auf der anderen Seite bei einer Brechzahl der Zylinderlinse (6) von ungefähr 1,5 ist.

5. Vorrichtung nach Anspruch 1, dadurch gekennzeichnet, daß die Zylinderlinse (6') plankonvex ist.

6. Vorrichtung nach Anspruch 5, dadurch gekennzeichnet, daß die Zylinderfläche der plankonvexen Zylinderlinse (6') der Sensorzeile (4) zugekehrt ist.

7. Vorrichtung nach Anspruch 1, dadurch gekennzeichnet, daß die Zylinderlinse konkav-konvex ist.

8. Vorrichtung nach Anspruch 7, dadurch gekennzeichnet, daß die Konvexfläche der konkav-konvexen Zylinderlinse der Sensorzeile (4) zugekehrt ist.

9. Vorrichtung nach einem der Ansprüche 1 - 8, dadurch gekennzeichnet, daß die Zylinderlinse aus mehreren einzelnen Zylinderlinsen zusammengesetzt ist.

10. Vorrichtung nach Anspruch 1, dadurch gekennzeichnet, daß die parallel zur Sensorzeile (4) angeordnete Zylinderlinse (6') mit einer um $90^{o}$ dazu versetzt angeordneten Zylinderlinse (7') ein anamorphotisches Objektiv bildet.

0188760

1/3

FIG. 1

FIG. 2

0188760

FIG. 3

FIG. 4

FIG.5

FIG. 6

FIG. 7

KLI 1058

FIG. 8

3/3

0188760